# DEMANDE DE BREVET EUROPEEN

(11) **EP 3 549 922 A1**
(43) Date de publication de la demande: **09.10.2019**
(21) Numéro de dépôt: 19167169.2
(22) Date de dépôt: 03.04.2019
(51) Int. Cl.: C04B 28/14, C04B 28/16, C04B 20/10

(54) **PROCÉDÉ DE PULVÉRISATION D'UNE COMPOSITION LIQUIDE SUR UNE POUDRE SULFATE DE CALCIUM**

(30) Priorité: 03.04.2018 FR 1852895
(71) Demandeur: Anhydritec, 84800 L'Isle-sur-la-Sorgue (FR)
(72) Inventeur: NARANJO, Horacio, 84800 Isle sur la Sorgue (FR); JALLA, Sébastien, 84450 Saint-Saturnin-Les-Avignon (FR)
(74) Mandataire: August Debouzy

(57) **Abrégé**

L'invention concerne un procédé de pulvérisation d'une composition liquide comprenant au moins un superplastifiant, tel qu'un polycarboxylate, sur une composition de poudre comprenant au moins 50% en poids d'un liant hydraulique sulfate de calcium, par rapport au poids total de composition de poudre. L'invention concerne également des particules de sulfate de calcium revêtues de superplastifiant, tel qu'un polycarboxylate, et une composition de mortier les comprenant.

## Description

### DOMAINE DE L'INVENTION

La présente invention a pour objet un procédé de pulvérisation d'un superplastifiant sous forme liquide sur une composition sous forme de poudre.

L'invention concerne également des particules de sulfate de calcium revêtues de superplastifiant et une composition de mortier pour chape les comprenant.

### ARRIERE-PLAN TECHNIQUE

Les chapes anhydrite ou chapes sulfate de calcium sont bien connues de l'homme du métier. Ce sont des mortiers fluides à base d'un liant base sulfate de calcium, fibré ou non, généralement préparé en centrale de production (centrales à béton le plus souvent) pour la réalisation de chapes autonivelantes, et livré sur chantier en camion malaxeur ou livré directement sur chantier par un système de distribution type camion mobile. Les matériaux pour chape base sulfate de calcium sont le sujet des normes EN 13454-1 et EN 13813.

Avant gâchage avec de l'eau, la chape se présente généralement sous la forme d'une composition de poudre (ou « poudre »). Elle comprend de manière classique au moins un liant, des granulats et éventuellement des additifs tels que des agents plastifiants, des agents anti-mousses, des agents viscosifiants, des agents épaississants, des agents accélérateur ou retardateur de prise, des agents hydrophobants, des traceurs, des colorants, etc.

Il est possible de prévoir des liants préfluidisés avec un dispersant/fluidifiant/plastifiant/superplastifiant. Ces termes sont utilisés indifféremment.

Des agents superplastifiants appartenant à différentes familles de polymères comprenant par exemple les lignosulfonates, les naphtalènes sulfonates, les melamines sulfonées et plus récemment les polycarboxylates ont été développés. Ces superplastifiants se présentent typiquement sous forme de liquide et sont intégrés à la fabrication des mortiers et bétons lors de la production de mélanges humides (produits frais) en centrale à béton, ces superplastifiants existent aussi sous forme de poudre pour permettre leur introduction dans les liants ou mortiers secs afin de fournir des produits pré-fluidifiés mais il est connu par les hommes de l'art que les versions poudre de ces superplastifiants liquides sont généralement moins efficaces voire éventuellement équivalents en terme d'efficacité de fluidification.

Néanmoins, les superplastifiants en particulier de type polycarboxylate sous forme de poudre sont difficiles à manipuler, sont sensibles à la température et sont difficiles à doser, puisqu'une très faible quantité est généralement nécessaire.

Le document FR2827594 décrit l'utilisation d'un superplastifiant de type polycarboxylate dans des compositions aqueuses de sulfate de calcium, au moment de la fabrication du mortier.

Il existe différents systèmes de pulvérisation de liquide sur des poudres avec ou sans addition d'air bien connus des hommes de l'art.

Il existe donc un réel besoin de mettre au point un procédé de fabrication d'une composition de chape prête à l'emploi qui soit simple à mettre en oeuvre et économique. L'invention permet également d'obtenir une composition de chape ayant les propriétés requises pour son utilisation, telles que de bonnes propriétés mécaniques et/ou physico-chimiques.

### RESUME DE L'INVENTION

L'invention a donc pour objet un procédé de pulvérisation d'une composition liquide comprenant au moins un superplastifiant sur une composition de poudre comprenant au moins 50% en poids d'un liant hydraulique sulfate de calcium, par rapport au poids total de composition de poudre.

Selon un mode de réalisation, lors du procédé de pulvérisation, de 0,01 à 10% en poids de composition liquide est ajouté dans la composition de poudre, pourcentage exprimé par rapport au poids total de la composition de poudre après ajout de la composition liquide.

Selon l'invention, le superplastifiant est choisi parmi les lignosulfonates, les naphtalènes sulfonates, les mélamines sulfonées ou les polycarboxylates, et leurs mélanges.

Selon un mode de réalisation, la composition liquide comprend, par rapport au poids total de composition liquide, au moins 5% en poids sec, de préférence au moins 10% en poids sec, préférentiellement au moins 15% en poids sec, de superplastifiant(s), de préférence choisi parmi les polymères polycarboxylates.

Selon un mode de réalisation, le superplastifiant est un polymère comprenant au moins un monomère choisi parmi les monomères carboxylates, acides carboxylique, éthers, allyliques et vinyliques.

Selon un mode de réalisation, la composition liquide comprend en outre au moins un additif choisi parmi les retardateurs, les antioxydants, les accélérateurs, les stabilisants, les modificateurs de rhéologie, les pigments liquides, les agents tensioactifs, les agents régulateurs de pH.

Selon un mode de réalisation, la composition de poudre comprend moins 60% en poids, plus préférentiellement au moins 75% en poids, encore plus préférentiellement au moins 90% en poids, idéalement au moins 95% en poids de sulfate de calcium, par rapport au poids total de la composition de poudre.

Selon un mode de réalisation, la composition liquide est pulvérisée sous forme de gouttelettes présentant par exemple une taille moyenne de particules allant de 0,01 µm à 50 µm.

Selon un mode de réalisation, la pulvérisation est effectuée à l'aide d'une buse éventuellement avec injection d'air.

L'invention a également pour objet des particules de sulfate de calcium revêtues d'une composition liquide comprenant au moins un superplastifiant.

Selon un mode de réalisation, les particules de sulfate de calcium selon l'invention sont susceptibles d'être obtenues par un procédé de pulvérisation selon l'invention.

Selon un mode de réalisation, la composition liquide comprend, par rapport au poids total de composition liquide, au moins 50% en poids, de préférence au moins 75% en poids, préférentiellement au moins 90% en poids, plus préférentiellement au moins 95% en poids, encore plus préférentiellement 100% en poids, de superplastifiant(s), de préférence choisi(s) parmi les polymères polycarboxylates.

Selon un mode de réalisation, la composition liquide représente de 0,01% à 10% en poids, du poids total des particules revêtues selon l'invention.

L'invention a également pour objet une composition pour mortier de chape comprenant des particules de sulfate de calcium selon l'invention et des granulats.

Selon un mode de réalisation, la composition pour mortier de chape comprend :
- De 3 à 60% en poids de particules de sulfate de calcium revêtues,
- De 40 à 97% en poids de granulats,
- De 0 à 30% en poids d'additifs, de préférence choisi parmi les retardateurs, les antioxydants, les accélérateurs, les stabilisants, les modificateurs de rhéologie, les pigments et traceurs, les agents tensioactif, les agents régulateur de pH et leurs mélange,
par rapport au poids total de la composition pour mortier de chape.

La présente invention permet de surmonter les inconvénients de l'état de la technique. Elle fournit plus particulièrement un procédé de fabrication d'un matériau (liant ou mortier sec) pour chape simple à mettre en oeuvre et économique

Les inventeurs ont découvert de manière surprenante que l'utilisation d'un superplastifiant sous forme liquide était plus efficace que l'utilisation du même superplastifiant sous forme de poudre, dans des compositions sèches pour chape à base de sulfate de calcium.

### DESCRIPTION DE MODES DE REALISATION DE L'INVENTION

### Procédé de pulvérisation

L'invention concerne donc en premier lieu un procédé de pulvérisation d'une composition liquide comprenant au moins un superplastifiant sur une composition de poudre comprenant au moins 50% en poids de liant hydraulique sulfate de calcium, par rapport au poids total de la composition de poudre, le superplastifiant étant choisi parmi les lignosulfonates, les naphtalènes sulfonates, les mélamines sulfonées ou les polycarboxylates, et leurs mélanges, les polycarboxylates présentant :
- n₁ motif(s) de type acide carboxylique de formule A -[(CH₂)C(R¹)(COOX)]- où n₁ est un entier allant par exemple de 1 à 100 et X représente un atome d'hydrogène, un métal alcalin, un métal alcalino-terreux ou un ammonium; et au moins n₂ et/ou n₄ et/ou n₆ motifs choisis parmi les motifs suivants :
   ∘ n₂ motif(s) de type ester carboxylique de formula B -[(CH₂)C(R²)(COO{CH₂CH₂O}ₙ₃R³)]- où n₂ est un entier allant par exemple de 1 à 100 et n₃ est un entier allant par exemple de 0 à 100 ;
   ∘ n₄ motif(s) de type (meth)allyl éther de formule C -[(CH₂)C(R⁴)-CH₂-O-(CH₂CH₂O)ₙ₅R⁵]- où n₄ est un entier allant par exemple de 1 à 100 et n₅ est un entier allant par exemple de 0 à 100 ;
   ∘ n₆ motifs de type isoprenyloxy ether de formule D -[(CH₂)C(R⁶)-CH₂-CH₂-O-(CH₂CH₂O)ₙ₇R⁷]- où n₆ est un entier allant par exemple de 1 à 100 et n₇ est un entier allant par exemple de 0 à 100 ;
R¹, R², R⁴ et R⁶, représentent, indépendamment les uns des autres, un atome d'hydrogène ou un groupement méthyle ;
R³, R⁵ et R⁷ représentent, indépendamment les uns des autres, un groupement alkyle ou alkényle, linéaire ramifié ou cyclique, comprenant de 1 à 36 atomes de carbone.

### Composition de poudre

La composition de poudre utilisée selon l'invention comprend au moins 50% en poids, par rapport au poids total de la composition de poudre, d'un liant hydraulique de type sulfate de calcium.

Par l'expression « liant hydraulique », on entend selon la présente invention tout composé ayant la propriété de s'hydrater en présence d'eau et dont l'hydratation permet d'obtenir un solide ayant des caractéristiques mécaniques.

Selon un mode de réalisation de l'invention, les liants hydrauliques de la composition de poudre sont tous de type sulfate de calcium.

Selon un autre mode de réalisation de l'invention, la composition de poudre comprend un liant hydraulique sulfate de calcium et un liant hydraulique ciment, de préférence le ratio massique liant hydraulique sulfate de calcium/ liant hydraulique ciment est supérieur ou égal à 1, préférentiellement strictement supérieur à 1, plus préférentiellement supérieur à 5. Selon un mode de réalisation particulier, la composition de poudre comprend au plus 5% en poids de ciment, par rapport au poids total de la composition de poudre.

La chape sulfate de calcium est aussi désignée sous le terme de chape anhydrite. Une telle chape comprend un liant qui est du sulfate de calcium, de préférence anhydrite, ou un liant comprenant au moins 50 % en poids de sulfate de calcium, de préférence au moins 85% voire sensiblement 100%. Des fillers de différentes natures (calcaires, siliceux, cendres volantes, fumées de silice) peuvent être utilisés en complément du sulfate de calcium.

Ce sulfate de calcium peut être du semi-hydrate (forme beta ou alpha, de source naturelle ou de synthèse) ou anhydre, par exemple anhydrite II ou anhydrite III, obtenue à partir de sources de synthèse (fluoroanhydrite par exemple) ou de carrières naturelles ou par calcination de gypse naturel ou de synthèse (par exemple du gypse de désulfuration FGD). On peut utiliser des mélanges de différentes sources de sulfate de calcium.

Selon un mode de réalisation de l'invention, la composition de poudre comprend de 60 à 100% en poids, de liant(s) hydraulique(s), ledit ou lesdits liant(s) hydraulique(s) comprenant au moins 75% en poids, de préférence au moins 85% en poids, de sulfate de calcium, par rapport au poids total de la composition de poudre.

Ainsi, selon un mode de réalisation, la composition de poudre comprend au moins 60% en poids, préférentiellement au moins 75% en poids, plus préférentiellement au moins 90% en poids, idéalement au moins 95% en poids de sulfate de calcium, par rapport au poids total de la composition de poudre avant ajout de la composition liquide.

Comme expliqué ci-dessus, d'autres liants hydrauliques peuvent être présents, en combinaison avec le sulfate de calcium, généralement en quantité minoritaire, inférieure à 50% en poids, préférentiellement inférieure à 25% en poids, plus préférentiellement inférieure à 10% en poids, encore plus préférentiellement inférieure à 5% en poids, par rapport au poids total de la composition de poudre. Parmi les autres liants hydrauliques, on peut citer le ciment.

La composition de poudre peut par exemple présenter une granulométrie allant de 0,1 µm à 1000 µm, mesurée par exemple selon la méthode de diffraction laser, bien connue de l'homme du métier.

Plus particulièrement, le sulfate de calcium mis en oeuvre dans l'invention présente par exemple une granulométrie allant de 0,1µm à 1000 µm avec un D(50) compris de préférence entre 5 et 100 µm, mesurée par exemple selon la méthode diffraction laser, bien connue de l'homme du métier.

La composition de poudre peut comprendre, en outre, des additifs. La composition de poudre mise en oeuvre selon l'invention comprend par exemple :
- de 70 à 100% en poids, de préférence de 85 à 99% en poids, de liant hydraulique de sulfate de calcium,
- de 0 à 10% en poids, de préférence de 1 à 5% en poids, de liant hydraulique ciment,
- de 0 à 30% en poids, de préférence de 1 à 15% en poids, d'au moins un additif, de préférence choisi parmi les retardateurs, les antioxydants, les accélérateurs, les stabilisants, les modificateurs de rhéologie, les pigments et traceurs, les agents tensioactif à but d'hydrofugation ou d'entrainement d'air, les agents régulateur de pH et leurs mélanges,
par rapport au poids total de la composition de poudre.

Selon un mode de réalisation préféré, la composition de poudre comprend, de préférence consiste en :
- de 70 à 100% en poids, de préférence de 85 à 99% en poids, de liant hydraulique de sulfate de calcium,
- de 0 à 10% en poids, de préférence de 1 à 5% en poids, de liant hydraulique ciment,
- de 0 à 30% en poids, de préférence de 1 à 15% en poids, d'au moins un additif, de préférence choisi parmi les retardateurs, les antioxydants, les accélérateurs, les stabilisants, les modificateurs de rhéologie, les pigments et traceurs, les agents tensioactif, les agents régulateur de pH et leurs mélanges,
par rapport au poids total de la composition de poudre.

En effet, la composition de poudre peut éventuellement comprendre un ou plusieurs additifs sous forme de poudre, tels que les retardateurs, les antioxydants, les accélérateurs, les stabilisants, les modificateurs de rhéologie, les pigments et traceurs, les agents tensioactif, les agents régulateur de pH.

Un ou plusieurs retardateurs de prise peuvent être utilisés. De tels retardateurs sont par exemple les acides carboxyliques tels que l'acide citrique, les sucres et leurs dérivés, le sel de calcium de polyoxymethylene amino-acide.

Un ou plusieurs accélérateurs de prise peuvent être utilisés. De tels accélérateurs sont le sulfate de potassium, mais aussi le sulfate de sodium, sulfate de lithium, sulfate d'ammonium, la chaux sous diverses formes comme la chaux vive et la chaux éteinte, le ciment portland ou alumineux, un hydrate alpha ou béta ou du gypse finement broyé (BMA Ball Mill Accelerator gypse broyé avec de l'amidon).

Les retardateurs et accélérateurs sont utilisés pour obtenir un temps de prise (entre le début et la fin de la prise) qui est compatible avec l'application souhaitée.

Des agents viscosifiants et des épaississants peuvent aussi être utilisés, notamment pour éviter la ségrégation et/ou le ressuage. Par exemple on peut utiliser des biopolymères (tels que les gommes) notamment obtenus par fermentation, la silice précipitée ou les dérivés de cellulose.

Des pigments colorés ou phosphorescents et/ou des traceurs minéraux ou organiques peuvent être utilisés, notamment pour permettre la reconnaissance du type de liant sulfate de calcium utilisé sur chantier et son fournisseur par observation visuelle ou bien analyse de la chape durcie après coulage et durcissement voire recouvrement.

Des agents tensioactif à but d'hydrophobisation ou d'entrainement d'air peuvent être utilisés, notamment pour modifier différentes performances du mortier et de la surface de la chape.

Des agents régulateurs de pH pour notamment ajuster le pH du liant en fonction des différentes matières premières approvisionnées et permettre une meilleure efficacité de certains adjuvants ne délivrant leur performance que dans une certaine gamme de pH.

La composition sous forme de poudre pourra éventuellement comprendre des granulats, de préférence en une quantité allant de 10 à 50% en poids, de préférence de 20 à 40% en poids, par rapport au poids total de la composition de poudre.

Les granulats qui sont éventuellement utilisés dans la composition de poudre mise en oeuvre dans l'invention sont des granulats classiques conformes à la norme EN 12620 (sables pour béton). En pratique, le Dmax est inférieur à 8mm, et en général le sable présente des tailles de particules sensiblement entre 0 et 4mm (qui sont dénommés généralement sables 0-4).

Selon un mode de réalisation de l'invention, les granulats sont choisis parmi les sables. Le sable peut être de différentes origines, alluvionnaires lavés (roulés, semi-concassés ou concassés), sables d'origine marine, sables concassés calcaires (sec ou lavés), sables d'origine magmatique (porphyre, granité), granulats de recyclage issus du concassage de bétons ou d'autres matériaux de construction.

### Composition liquide comprenant au moins un superplastifiant

L'invention met en oeuvre une composition liquide comprenant au moins un superplastifiant. Le superplastifiant a un rôle de fluidifiant dans une composition de chape anhydrite (de type sulfate de calcium). Ainsi, la composition liquide comprenant au moins un superplastifiant est à distinguer d'une composition de superplastifiant sous forme de poudre, comme cela est généralement utilisé dans l'état de la technique.

Par « composition liquide » au sens de la présente invention, il faut comprendre un mélange homogène sous la forme d'une solution ou un mélange hétérogène sous la forme d'une émulsion ou d'une suspension.

Par « superplastifiant » au sens de la présente invention, il faut comprendre toutes les familles de polymères fluidifiants développés pour les chapes sulfate de calcium tels que les lignosulfonates, les naphtalènes sulfonates, les mélamines sulfonées ou les polycarboxylates.

Le superplastifiant, de préférence choisi parmi les polycarboxylates, mis en oeuvre selon l'invention peut présenter une masse molaire allant de 10000 à 200 000 g/mol, exprimée par exemple en équivalent POE (polyoxyéthylène).

Selon un mode de réalisation, le superplastifiant est un polymère comprenant au moins un monomère choisi parmi les monomères carboxylate, acide carboxylique, éthers, allylique et vinylique.

Selon un mode de réalisation de l'invention, le superplastifiant comprend au moins un motif carboxylate et une chaîne latérale présentant au moins un motif éthoxylé.

Selon un mode de réalisation préféré, le superplastifiant est choisi parmi les polymères polycarboxylates, aussi désignés par polymère de type PCE.

Les polycarboxylates sont généralement sous forme de polymères peigne comprenant une chaîne principale substituée par des chaînes latérales, au moins une partie des chaînes latérales comprenant des motifs alkoxy, tels que des motifs éthoxy et/ou propoxy.

Les polymères de type PCE sont disponibles commercialement, typiquement sous forme d'une émulsion, dispersion ou d'une solution en phase aqueuse.

Le polycarboxylate peut être un homopolymère ou un copolymère, de préférence le polycarboxylate est un copolymère.

Selon un mode de réalisation de l'invention, le superplastifiant est choisi parmi les polycarboxylates et présente :
- n₁ motif(s) de type acide carboxylique de formule A -[(CH₂)C(R¹)(COOX)]- où n₁ est un entier allant par exemple de 1 à 100 et X représente un atome d'hydrogène, un métal alcalin, un métal alcalino-terreux ou un ammonium; et au moins n₂, n₄ et/ou n₆ motifs choisis parmi les motifs suivants :
   ∘ n₂ motif(s) de type ester carboxylique de formula B -[(CH₂)C(R²)(COO{CH₂CH₂O}ₙ₃R³)]- où n₂ est un entier allant par exemple de 1 à 100 et n₃ est un entier allant par exemple de 0 à 100 ;
   ∘ n₄ motif(s) de type (meth)allyl éther de formule C -[(CH₂)C(R⁴)-CH₂-O-(CH₂CH₂O)ₙ₅R⁵]- où n₄ est un entier allant par exemple de 1 à 100 et n₅ est un entier allant par exemple de 0 à 100 ;
   ∘ n₆ motifs de type isoprenyloxy ether de formule D -[(CH₂)C(R⁶)-CH₂-CH₂-O-(CH₂CH₂O)ₙ₇R⁷]- où n₆ est un entier allant par exemple de 1 à 100 et n₇ est un entier allant par exemple de 0 à 100 ;
R¹, R², R⁴ et R⁶, représentent, indépendamment les uns des autres, un atome d'hydrogène ou un groupement méthyle ;
R³, R⁵ et R⁷ représentent, indépendamment les uns des autres, un groupement alkyle ou alkényle, linéaire ramifié ou cyclique, comprenant de 1 à 36 atomes de carbone.

Selon un mode de réalisation de l'invention, le superplastifiant est choisi parmi les polycarboxylates et présente :
- n₁ motif(s) de type acide carboxylique de formule A -[(CH₂)C(R¹)(COOX)]- où n₁ est un entier allant par exemple de 1 à 100 et X représente un atome d'hydrogène, un métal alcalin, un métal alcalino-terreux ou un ammonium; et au moins n₂ et/ou n₄ et/ou n₆ motifs choisis parmi les motifs suivants :
   ∘ n₂ motif(s) de type ester carboxylique de formula B -[(CH₂)C(R²)(COO{CH₂CH₂O}ₙ₃R³)]- où n₂ est un entier allant par exemple de 1 à 100 et n₃ est un entier allant par exemple de 1 à 100 ;
   ∘ n₄ motif(s) de type (meth)allyl éther de formule C -[(CH₂)C(R⁴)-CH₂-O-(CH₂CH₂O)ₙ₅R⁵]- où n₄ est un entier allant par exemple de 1 à 100 et n₅ est un entier allant par exemple de 1 à 100 ;
   ∘ n₆ motifs de type isoprenyloxy ether de formule D -[(CH₂)C(R⁶)-CH₂-CH₂-O-(CH₂CH₂O)ₙ₇R⁷]- où n₆ est un entier allant par exemple de 1 à 100 et n₇ est un entier allant par exemple de 1 à 100 ;
R¹, R², R⁴ et R⁶, représentent, indépendamment les uns des autres, un atome d'hydrogène ou un groupement méthyle ;
R³, R⁵ et R⁷ représentent, indépendamment les uns des autres, un groupement alkyle ou alkényle, linéaire ramifié ou cyclique, comprenant de 1 à 36 atomes de carbone.

Selon un mode de réalisation de l'invention, le superplastifiant est choisi parmi les polycarboxylates et présente :
- n₁ motif(s) de type acide carboxylique de formule A -[(CH₂)C(R¹)(COOX)]- où n₁ est un entier allant par exemple de 1 à 100 et X représente un atome d'hydrogène, un métal alcalin, un métal alcalino-terreux ou un ammonium; et
- n₂ motif(s) de type ester carboxylique de formula B -[(CH₂)C(R²)(COO{CH₂CH₂O}ₙ₃R³)]- où n₂ est un entier allant par exemple de 1 à 100 et n₃ est un entier allant par exemple de 0 à 100, de préférence de 1 à 100 :
où R¹, R², R⁴, R⁶, R³, R⁵ et R⁷ sont tels que définis ci-dessus.

Selon un mode de réalisation de l'invention, le superplastifiant est un polymère comprenant au moins un monomère de type acide carboxylique, par exemple de formule A ci-dessus, et au moins un monomère de type carboxylate (ester), par exemple de formule B ci-dessus. De préférence, le ratio molaire des unités de type carboxylate / unités de type acide carboxylique va de 10% à 60%.

Selon un mode de réalisation de l'invention, la masse molaire des motifs monomères de type acide carboxylique est supérieure à la masse molaire des motifs monomères de type carboxylate. Dans le cas où le superplastifiant comprend des motifs de formulas A et B, de préférence la masse molaire des motifs monomères de type acide carboxylique de formule A est supérieure à la masse molaire des motifs monomères de type carboxylate de formule B.

Selon un mode de réalisation de l'invention, le superplastifiant mis en oeuvre dans l'invention ne comprend pas de monomères différents des monomères de type acide carboxylique et de type carboxylate. De manière avantageuse, le superplastifiant mis en oeuvre dans l'invention ne comprend pas de monomères différents des monomères de formule A et B définies ci-dessus.

De préférence, la composition liquide comprend au moins 5% en poids sec, de préférence au moins 10% en poids sec, préférentiellement au moins 15% en poids sec, de superplastifiant, par rapport au poids total de la composition liquide.

Selon un mode de réalisation, la composition liquide consiste en un ou plusieurs polymère(s) superplastifiant dans une phase aqueuse.

Selon un autre mode de réalisation, la composition liquide comprend au moins un additif liquide différent du/des polymères superplastifiants définis dans la présente invention.

Parmi les additifs liquides qui peuvent être utilisés dans la composition liquide selon l'invention, on peut citer les retardateurs, les antioxydants, les accélérateurs, les stabilisants, les modificateurs de rhéologie, les pigments et traceurs, les agents tensioactif, les agents régulateur de pH. Lorsqu'ils sont présents dans la composition liquide, ces additifs représentent de préférence de 0,1 à 15% en poids sec, de préférence de 0,5 à 10% en poids sec, préférentiellement de 1 à 5% en poids sec, par rapport au poids total de la composition liquide.

Selon un mode de réalisation de l'invention, la composition liquide comprend, par rapport au poids total de la composition liquide :
- de 5 à 50% en poids sec, de préférence de 10 à 40% en poids sec, de polymères de type super plastifiant de type PCE ou différents des polymères de type PCE,
- de 0,1 à 15% en poids sec, de préférence de 0,5 à 10% en poids sec, d'additif(s) liquide(s) choisi(s) parmi les retardateurs, les antioxydants, les accélérateurs, les stabilisants, les modificateurs de rhéologie, les pigments et traceurs, les agents tensioactif, les agents régulateur de pH,
- qsp eau.

Selon un mode de réalisation de l'invention, la composition liquide comprend, en particulier consiste en :
- de 5 à 50% en poids sec, de préférence de 10 à 40% en poids sec, de polymère(s) de type PCE,
- de 0,1 à 15% en poids sec, de préférence de 0,5 à 10% en poids sec, d'additif(s) liquide(s) choisi(s) parmi les retardateurs, les antioxydants, les accélérateurs, les stabilisants, les modificateurs de rhéologie, les pigments et traceurs, les agents tensioactif, les agents régulateur de pH,
- qsp eau.

Selon un mode de réalisation, la composition liquide est sous la forme aqueuse, présentant par exemple une viscosité allant de 10 mPa.s à 2000 mPa.s.

Le superplastifiant est généralement utilisé dans des compositions de chape en tant qu'agent fluidifiant/dispersant/plastifiant. Ces termes sont utilisés de façon interchangeable pour désigner un additif permettant de réduire la demande en eau et de maintenir la fluidité/rhéologie de la pâte.

### Pulvérisation

Selon l'invention, la composition liquide est pulvérisée sur la composition de poudre, selon des méthodes bien connues de l'homme du métier. A titre d'exemple non limitatif, on peut citer les procédés de pulvérisation décrit dans les Techniques de l'Ingénieur sur les techniques d'atomisation, pulvérisation et aérosols qui décrit les différentes technologies de pulvérisation adaptée à notre application à savoir via l'utilisation de buses d'injection avec ou sans injection d'air (airless) appelés aussi atomiseurs à pression, à swirl ou rotatifs.

Selon un mode de réalisation, la composition liquide est pulvérisée sous forme de gouttelettes présentant une taille allant de 0,1 µm à 100 µm, voire de 1 à 70 µm.

Lors de la pulvérisation, la composition de poudre est de préférence mise en mouvement, à l'aide par exemple de pales permettant une meilleure dispersion des gouttelettes de la composition liquide sur la composition de poudre.

Selon un mode de réalisation de l'invention, de 0,01% à 10% en poids de composition liquide est ajouté, par rapport au poids total de la composition de poudre après ajout de la composition liquide.

L'invention repose sur l'utilisation d'un dispersant (aussi appelé plastifiant ou superplastifiant ou fluidifiant) sous forme liquide dans des compositions de poudre à base de liant hydraulique de type sulfate de calcium.

Les inventeurs ont en effet découvert que l'utilisation d'un dispersant sous forme liquide introduit dans une composition de poudre à base de sulfate de calcium permettait d'augmenter l'efficacité dudit dispersant de l'ordre de 10 à 15%. L'efficacité du dispersant est évaluée par la mesure de l'étalement du mortier pour chape

A l'issue du procédé de pulvérisation selon l'invention, des particules de sulfate de calcium revêtues d'une composition liquide comprenant au moins un superplastifiant sont alors obtenues.

### Particules de sulfate de calcium revêtues d'un liquide contenant au moins un superplastifiant

L'invention concerne également des particules de sulfate de calcium revêtues d'une composition liquide comprenant au moins un superplastifiant.

Les particules de sulfate de calcium selon l'invention sont par exemple susceptibles d'être obtenues par le procédé de pulvérisation selon l'invention.

Selon un mode de réalisation, les particules de sulfate de calcium (non revêtues de liquide) sont telles que définies ci-dessus dans le cadre du procédé de pulvérisation. Elles peuvent par exemple présenter une taille de particules moyenne allant de 0,1 µm à 1000 µm, mesurée par diffraction laser.

Selon un mode de réalisation, la composition liquide est telle que définie ci-dessus dans le cadre du procédé de pulvérisation.

De préférence, la composition liquide comprend, par rapport au poids total de la composition liquide, au moins 5% en poids sec, de préférence au moins 10% en poids sec, préférentiellement au moins 15% en poids sec, de superplastifiant(s), de préférence choisi(s) parmi les polymères de type PCE.

En particulier, le superplastifiant peut présenter une ou plusieurs des caractéristiques décrites ci-dessus dans le cadre du procédé de pulvérisation selon l'invention.

Selon un mode de réalisation de l'invention, la composition liquide représente de 0,01% à 10% en poids, du poids total des particules revêtues selon l'invention.

Les particules de sulfate de calcium revêtues d'un superplastifiant, en particulier d'un plastifiant liquide de type PCE, peuvent ensuite être incorporées dans une composition de mortier de chape anhydrite.

Les particules de sulfate de calcium selon l'invention peuvent comprendre en outre des particules d'additifs également revêtues de liquide, comme cela est décrit ci-dessus dans le cadre du procédé de pulvérisation. Lesdits additifs sous forme de poudre peuvent être choisis parmi les fibres, les retardateurs, les antioxydants, les accélérateurs, les stabilisants, les modificateurs de rhéologie, les pigments et traceurs, les agents tensioactif, les agents régulateur de pH, .

De préférence, lesdits additifs sous forme de poudre représentent moins de 15% en poids, préférentiellement moins de 10% en poids, plus préférentiellement moins de 5% en poids, du poids total des particules (sulfate de calcium + additifs).

Comme indiqué ci-dessus, il a été découvert qu'introduire un superplastifiant, sous forme liquide permettait d'obtenir une plus grande efficacité. Ainsi, les particules de sulfate de calcium selon l'invention présentent de meilleures propriétés que les particules de sulfate de calcium de l'art antérieur comprenant un superplastifiant, sous forme liquide dans le mortier ou sous forme de poudre dans le liant.

### Composition pour mortier de chape

L'invention concerne également une composition pour mortier de chape comprenant les particules de sulfate de calcium revêtues selon l'invention et des granulats.

Les granulats qui sont incorporés dans la composition de mortier de chape selon l'invention peuvent être des granulats classiques conformes à la norme EN 12620 (sables pour béton). En pratique, le Dmax est inférieur à 8mm, et en général le sable présente des tailles de particules sensiblement entre 0 et 4mm (qui sont dénommés généralement sables 0-4).

Selon un mode de réalisation de l'invention, les granulats sont choisis parmi les sables. Le sable peut être de différentes origines, alluvionnaires lavés (roulés, semi-concassés ou concassés), sables d'origine marine, sables concassés calcaires (secs ou lavés), sables d'origine magmatique (porphyre, granité), granulats de recyclage issus du concassage de bétons ou d'autres matériaux de construction.

Les matériaux pour chape selon l'invention remplissent généralement les exigences des normes européennes EN 13454-1 (liant) et EN 13813 (mortier) relatives aux liants et mortiers à base de sulfate de calcium pour chapes fluides.

La quantité de liant notamment sulfate de calcium dans la chape est classique, typiquement de l'ordre de 300 à 1000 kg/m³ Le liant est présent en une quantité classique, notamment pour atteindre et conserver les qualités minimales spécifiées dans les normes ci-dessus.

Selon un mode de réalisation particulier, la composition pour mortier de chape comprend en outre du ciment, de préférence en une quantité inférieure à 10% en poids, préférentiellement inférieur à 5% en poids, plus préférentiellement inférieur à 1% en poids, par rapport au poids total de la composition de mortier avant gâchage.

Selon un mode de réalisation, la composition pour mortier de chape comprend, de préférence consiste en :
- de 3 à 60% en poids, de préférence de 5 à 50% en poids, préférentiellement de 10 à 30% en poids, de particules de sulfate de calcium selon l'invention, et
- de 40% à 97% en poids, de préférence de 50 à 95% en poids, préférentiellement de 70 à 90% en poids, de granulats,
- de 0 à 30% en poids, de préférence de 0,5 à 20% en poids, préférentiellement de 1 à 10% en poids, d'additifs (différents des liants, des granulats, et des plastifiants liquides) choisis de préférence parmi les fibres, les retardateurs, les antioxydants, les accélérateurs, les stabilisants, les modificateurs de rhéologie, les pigments et traceurs, les agents tensioactif, les agents régulateur de pH et leur mélange,
par rapport au poids total de la composition pour mortier de chape avant son gâchage.

La composition pour mortier de chape selon l'invention est fabriquée selon des procédés classiques, bien connues de l'homme du métier, par exemple par mélange des particules selon l'invention à des granulats.

La composition pour mortier de chape peut se présenter sous forme sèche.

De façon classique, de l'eau peut ensuite être ajoutée à la composition de mortier de chape selon l'invention pour son gâchage, en vue d'obtenir la consistance et les résistances mécaniques requises pour l'application du mortier sur chantier. La quantité d'eau est généralement susceptible d'être exprimée par rapport au liant, et le ratio eau/liant est généralement compris entre 0,27 et 0,70, de préférence entre 0,30 et 0,60, avantageusement entre 0,35 et 0,55.

Une fois gâchée avec de l'eau, la composition se présente sous la forme d'une pâte

Les exemples suivants illustrent l'invention sans la limiter.

### EXEMPLES

### Ex.1 - Mode de pulvérisation d'une composition liquide contenant au moins un superplastifiant :

La pulvérisation de la composition liquide est réalisée dans un mélangeur contenant la composition de poudre à base de sulfate de calcium. Elle est obtenue à l'aide d'un pulvérisateur rotatif motorisé installé à l'intérieur du mélangeur qui va créer un brouillard de particules liquide sous l'effet combiné de la force centrifuge générée par la rotation à haute vitesse et de l'introduction d'air comprimé dans le pulvérisateur. La pulvérisation est suivie d'une étape de mélange pour assurer la bonne homogénéité du mélange final.

A titre d'exemple d'un superplastifiant, « PCE 1 » liquide comprenant des unités de formule A et des unités de formule B et ayant un extrait sec de 40% en poids et un ratio molaire des unités de type carboxylate/unités de type acide carboxylique de 20%, est pulvérisé à 0,16% en masse par rapport à la masse totale du liant.

Un autre superplastifiant, « PCE 2 » liquide comprenant des unités de formule A et des unités de formule B et ayant un extrait sec de 40% en poids et un ratio molaire des unités de type carboxylate/unités de type acide carboxylique de 40%, est quant à lui pulvérisé à 0,23% en masse par rapport à la masse totale du liant.

### Ex. 2 - Mode de préparation d'un mortier à base de sulfate de calcium selon l'art antérieur :

Le mortier à base de sulfate de calcium est préparé selon la formulation ci-dessous :
- 650 Kg/m3 de liant base sulfate de calcium formulé avec tous les adjuvants nécessaires hormis le super plastifiant
- 275 L/m³ eau
- 1300 Kg/m³ de sable normalisé CEN
- X% en poids d'un superplastifiant liquide ajouté dans l'eau de gâchage de manière à obtenir un étalement de 260mm +/- 5mm.

### Ex. 3 - Mode de préparation d'un mortier à base de sulfate de calcium selon invention:

Le mortier à base de sulfate de calcium est préparé selon la formulation ci-dessous :
- 650 Kg de liant base sulfate de calcium préadjuvanté avec tous les adjuvants nécessaires identiques à Ex.1 et avec en plus 0,16% en poids du polymère PCE 1 liquide ou 0,23% en poids du polymère PCE 2 liquide.
- 275 L/m³ eau
- 1300 Kg/m³ de sable normalisé CEN

La préparation des mortiers décrits ci-dessus est réalisée conformément aux conditions établies dans la norme NF EN 196-1.

Le gâchage effectué, les différents polymères sont évalués par rapport à l'étalement du mortier obtenu juste après la fin de la séquence de malaxage. Les résultats sont présentés dans les tableaux 1 et 2 ci-dessous.

**Tableau 1 : comparaison avec polymère PCE 1**

| | | PCE 1 liquide ajouté dans l'eau de gâchage | PCE 1 liquide pulvérisé sur le liant |
|---|---|---|---|
| Formulation mortier | Liant (Kg/m3) | 650 | 650 |
| | Eau (L/m3) | 275 | 275 |
| | Sable CEN (Kg/m3) | 1300 | 1300 |
| | Adjuvant PCE 1 (% en poids) | 0,19% | 0,16% |
| Essais | Etalement à 5 min (mm) | 260 | 262 |

Dans l'exemple ci-dessus la pulvérisation permet un gain d'environ 15% par rapport à l'ajout du PCE liquide dans l'eau de gâchage.

**Tableau 2 : Comparaison avec polymère PCE 2**

| | | PCE 2 liquide ajouté dans l'eau de gâchage | PCE 2 liquide pulvérisé sur le liant |
|---|---|---|---|
| Formulation mortier | Liant (Kg/m3) | 650 | 650 |
| | Eau (L/m3) | 275 | 275 |
| | Sable CEN (Kg/m3) | 1300 | 1300 |
| | Adjuvant PCE 2 (% en poids) | 0,27% | 0,23% |
| Essais | Etalement à 5 min (mm) | 258 | 260 |

Dans ce tableau 2, une structure différente de PCE est utilisée. La pulvérisation permet à nouveau un gain d'environ 15% sur le dosage à introduire comparativement à l'ajout du PCE liquide dans l'eau de gâchage.

## Revendications

1. Procédé de pulvérisation d'une composition liquide comprenant au moins un superplastifiant sur une composition de poudre comprenant au moins 50% en poids d'un liant hydraulique sulfate de calcium, par rapport au poids total de composition de poudre, le superplastifiant étant choisi parmi les lignosulfonates, les naphtalènes sulfonates, les mélamines sulfonées ou les polycarboxylates, et leurs mélanges, les polycarboxylates présentant :
- n₁ motif(s) de type acide carboxylique de formule A -[(CH₂)C(R¹)(COOX)]- où n₁ est un entier allant par exemple de 1 à 100 et X représente un atome d'hydrogène, un métal alcalin, un métal alcalino-terreux ou un ammonium;
- et au moins n₂, n₄ et/ou n₆ motifs choisis parmi les motifs suivants :
∘ n₂ motif(s) de type ester carboxylique de formula B -[(CH₂)C(R²)(COO{CH₂CH₂O}ₙ₃R³)]- où n₂ est un entier allant par exemple de 1 à 100 et n₃ est un entier allant par exemple de 0 à 100 ;
∘ n₄ motif(s) de type (meth)allyl éther de formule C -[(CH₂)C(R⁴)-CH₂-O-(CH₂CH₂O)ₙ₅R⁵]- où n₄ est un entier allant par exemple de 1 à 100 et n₅ est un entier allant par exemple de 0 à 100 ;
∘ n₆ motifs de type isoprenyloxy ether de formule D -[(CH₂)C(R⁶)-CH₂-CH₂-O-(CH₂CH₂O)ₙ₇R⁷]- où n₆ est un entier allant par exemple de 1 à 100 et n₇ est un entier allant par exemple de 0 à 100 ;
R¹, R², R⁴ et R⁶, représentent, indépendamment les uns des autres, un atome d'hydrogène ou un groupement méthyle ;
R³, R⁵ et R⁷ représentent, indépendamment les uns des autres, un groupement alkyle ou alkényle, linéaire ramifié ou cyclique, comprenant de 1 à 36 atomes de carbone.

2. Procédé selon la revendication 1, dans lequel de 0,01 à 10% en poids de composition liquide est ajouté dans la composition de poudre, pourcentage exprimé par rapport au poids total de la composition de poudre après ajout de la composition liquide.

3. Procédé selon la revendication 1 ou 2, dans lequel le superplastifiant comprend au moins un motif carboxylate et une chaîne latérale présentant au moins un motif éthoxylé.

4. Procédé selon l'une des revendications 1 à 3, dans lequel la composition liquide comprend, par rapport au poids total de composition liquide, au moins 5% en poids sec, de préférence au moins 10% en poids sec, préférentiellement au moins 15% en poids sec, de superplastifiant(s), de préférence choisi parmi les polymères polycarboxylates.

5. Procédé selon l'une quelconque des revendications 1 à 4, dans lequel le superplastifiant est un polycarboxylate comprenant au moins un motif de formule A et au moins un motif de formule B, formule B dans laquelle n₃ va de préférence de 1 à 100.

6. Procédé selon l'une quelconque des revendications 1 à 5, dans lequel la composition liquide comprend en outre au moins un additif choisi parmi les retardateurs, les antioxydants, les accélérateurs, les stabilisants, les modificateurs de rhéologie, les pigments et traceurs, les agents tensioactifs, les agents régulateurs de pH et leurs mélanges.

7. Procédé selon l'une quelconque des revendications 1 à 6, dans lequel la composition de poudre comprend moins 60% en poids, plus préférentiellement au moins 75% en poids, encore plus préférentiellement au moins 90% en poids, idéalement au moins 95% en poids de sulfate de calcium.

8. Procédé selon l'une quelconque des revendications 1 à 7, dans lequel la composition liquide est pulvérisée sous forme de gouttelettes présentant par exemple une taille moyenne de particules allant de 0,01 µm à 50 µm.

9. Procédé selon l'une quelconque des revendications 1 à 8, dans lequel la pulvérisation est effectuée à l'aide d'une buse éventuellement avec injection d'air.

10. Particules de sulfate de calcium revêtues d'une composition liquide comprenant au moins un superplastifiant.

11. Particules de sulfate de calcium selon la revendication 10, susceptibles d'être obtenues par un procédé selon l'une quelconque des revendications 1 à 9.

12. Particules selon la revendication 10 ou 11, dans lesquelles la composition liquide comprend, par rapport au poids total de composition liquide, au moins 50% en poids, de préférence au moins 75% en poids, préférentiellement au moins 90% en poids, plus préférentiellement au moins 95% en poids, encore plus préférentiellement 100% en poids, de superplastifiant(s), de préférence choisi(s) parmi les polymères polycarboxylates.

13. Particules selon l'une quelconque des revendications 10 à 12, dans lesquelles la composition liquide représente de 0,01% à 10% en poids, du poids total des particules revêtues selon l'invention.

14. Composition pour mortier de chape comprenant des particules de sulfate de calcium revêtues selon l'une quelconque des revendications 10 à 13 et des granulats.

15. Composition pour mortier de chape selon la revendication 14, comprenant :
- De 3 à 60% en poids de particules de sulfate de calcium revêtues,
- De 40 à 97% en poids de granulats,
- De 0 à 30% en poids d'additifs, de préférence choisi parmi des agents anti-mousse, des agents viscosifiants, des agents épaississants, des agents accélérateur ou retardateur de prise, des agents hydrophobants, des traceurs, des colorants, et leurs mélange,
par rapport au poids total de la composition pour mortier de chape.
